# EUROPEAN PATENT SPECIFICATION

(11) **EP 2 530 496 B1**
(45) Date of publication and mention of the grant of the patent: **22.01.2020**
(21) Application number: 12169700.7
(22) Date of filing: 29.05.2012
(51) Int. Cl.: G02B 5/08

(54) **High reflectance temperature resistant aluminium based mirror reflectors**
Resistente Spiegelreflektoren auf Aluminiumbasis mit hoher Reflektanztemperatur
Réflecteurs de miroir à base d'aluminium résistant à haute température de réflectance

(30) Priority: 31.05.2011 GB 201109032
(43) Date of publication of application: 05.12.2012
(73) Proprietor: Almeco S.p.A., 20098 San Giuliano Milanese (IT)
(72) Inventor: Dowell, Alan J, Amersham, Buckinghamshire HP6 6HJ (GB)
(74) Representative: Strehl Schübel-Hopf & Partner

(56) References cited:
- EP-A2- 2 418 521
- GB-A- 2 472 443
- JP-A- 10 019 802
- US-A1- 2003 048 554

## Description

### BACKGROUND OF THE INVENTION

The present invention relates to high reflectance temperature resistant aluminium based mirror reflectors.

It is well known to use systems of mirrors to concentrate the sun's rays in order to generate heat and to employ this heat to produce electricity.

Reflecting mirror systems for the generation of solar thermal energy can employ various designs, including curved or parabolic trough reflectors, Fresnel reflector systems or parabolic dishes to form the primary reflecting units which collect the sun's radiation.

These primary mirrors concentrate the sun's rays onto a tube or receptor which becomes heated by the concentrated rays and contains a heat transfer medium which can be used to generate steam or process heat.

The receptors and collector tubes are generally quite small in size compared to the size of the primary mirrors and, since these mirrors and collectors often show deviation from perfect geometry and the angular deviation tolerance for the reflected rays is quite small, some of the reflected rays can miss the targeted thermal collector.

This results in a lower efficiency of energy generation which can render the plant uneconomic.

To overcome this problem it is common in tube collector plants to employ a secondary mirror to concentrate the radiation not directly striking the collector tube and to re-direct it onto the thermal collector tube.

In one such design, the fluid filled tubes collecting the radiation are contained within an evacuated glass tube to minimise heat loss and in this case the secondary mirrors are largely isolated from convection effects from the high temperature of the tube and do not reach elevated temperatures. In these installations it is possible to use conventional aluminium based high reflectance mirrors as used for primary solar reflector surfaces.

However, the use of evacuated tubes significantly increases the cost of constructing a plant and systems are now being manufactured with tubes operating in closed troughs at atmospheric pressure.

In this case, due to its close proximity to the hot tube, the reflector can reach relatively high temperatures, greater than 250°C. At these temperatures, high performance aluminium based reflectors manufactured according to the previous art show a deterioration in reflective properties with time, which leads to inefficiency and sometimes even catastrophic failure of the secondary reflector.

Earlier materials used for secondary mirror applications include mirror reflective aluminium sheet and strip which is processed by electrochemical and PVD vacuum coating techniques to produce a surface with a reflectivity in excess of 95%.

The high reflectance properties are achieved using as a base, electro-brightened and anodized high purity aluminium to which is applied a reflection enhancing optical layer stack as described below. Firstly an optically dense layer of metallic aluminium or silver is applied by physical vapour deposition (PVD) to the anodized metal to provide a high reflectance base layer. Secondly a layer of low refractive index (index range 1.3-1.8) transparent material, such as magnesium fluoride, aluminium oxide or silicon oxide is applied by PVD, and thirdly this is followed by a high refractive index layer (index range 1.8-3.0) of transparent material such as tin oxide, titanium oxide or zirconium oxide.

The combination of these layers results in total reflectance values of over 95% for products made using an aluminium reflection layer and over 98% for products made using a silver reflection layer.

The bright aluminium used for this process is anodized to protect the surface against scratching but the thickness of anodizing needs to be limited to between 0.5 and 1.5 microns to avoid undesirable release of water vapour into the vacuum chambers.

In investigation of the causes of deterioration of reflective properties at high temperatures we have found that enhanced aluminium mirrors manufactured according to above method lose their reflective properties due to oxidation of the vacuum deposited aluminium or silver reflectance layer.

This led us to the invention of a new method for producing the mirror material used for the reflectors, for which we have requested patent coverage in patent application No. GB 1012965.8.

This new material shows a slower reduction in reflectance loss at high temperatures and therefore extends their useful life, but there is still a demand for further performance improvements and this has led us to develop a reflector product as described in the present invention which, in addition to giving a reflective surface with improved temperature resistance, has a high emittance coating to aid heat dissipation.

GB 2472443 A discloses a method of making a temperature resistant surface on aluminium reflectors for use in secondary solar reflectors. An electro-brightened aluminium strip is electrochemically coated with a protective coating of aluminium oxide. A reflectivity enhancing layer system of a silicon oxide layer and a titanium oxide layer is coated thereon.

US 2003/048554 A1 discloses a reflector with high total reflection comprising a reflector body and arranged thereon a functional coating, a sequence of reflective layers containing one reflective layer and several transparent layers and containing a silicon oxide protective layer.

JP 10-019802 A discloses a mirror finished aluminum reflector which is coated on the rear side with a black heat resistant paint film.

### SUMMARY OF THE INVENTION

In the present invention an aluminium strip with a high purity bright rolled mirror surface is processed electro-chemically by electro-brightening as in the previous art and by barrier layer anodizing to produce a thin hard transparent layer of aluminium oxide to protect the highly reflective surface of the high purity electro-brightened surface without significant detriment to its reflective properties.

The mirror reflective strip so produced is then processed in a vacuum coating plant in which, without PVD coating the surface with pure aluminium as in the normal method, there is applied successively a layer of low refractive index material and a layer of high refractive index material, which acting together with the reflective pure aluminium substrate surface provide a total reflectance of greater than 93%.

The reflective surface of the strip is then coated with a temperature resistant transparent layer to increase protection against oxidation and to increase heat emission from the surface. The materials for such a coating are selected from silicon oxide and titanium oxide and are applied using sol-gel coating technology or physical or chemical vapour deposition. The material at this stage has a reverse side surface consisting of a thin coating of aluminium oxide (<1µm) produced during the barrier anodizing process.

In a further process step, not previously employed for this or other reflector applications, the reverse side of the reflector is given a further treatment by anodic oxidation to produce a temperature resistant coating of aluminium oxide of thickness greater than 2.0 microns to give a thermal emissivity of 50% or more.

This gives greater dispersion of heat from the reverse side of the reflector under peak temperature operating conditions and therefore maintains the reflector at a lower temperature during its operation, resulting in a significantly increased service life. To avoid damaging the reflective surface during this process step it is masked during the electro-chemical oxidation process with a suitable plastic material.

After production, the reverse side oxide layer is subjected to a tensile mechanical stress treatment to pre-crack the oxide layer. This final step is important to avoid macro-cracking of the oxide which can otherwise adversely affect the mirror reflectance characteristics of the metal surface when heated.

In an alternative process the reverse side can be coated with a layer of silicon oxide applied by sol-gel coating or vacuum coating, but the emissivity and performance obtained by this method is inferior to that reached using anodically produced aluminium oxide.

Reflectors made according to the present invention retain their reflective properties much better than those made according to the previous art, partly as a result of the special method of producing the reflective surface, partly through the increased dissipation of heat which results in a lower reflector temperature.

However the metal substrate becomes softened during plant operation and this can lead to distortion and lower efficiency.

It can therefore be advantageous to use a more temperature resistant alloy as the core of the reflector, with a high purity aluminium surface layer applied to it by bonding during the hot rolling stage of metal production. Alloys suitable for this application may be taken from the Aluminium Association series 3000 (Al-Mn type), 5000 (Al-Mg type) or 8000 (Al-Fe type).

### BRIEF DESCRIPTION OF THE DRAWINGS

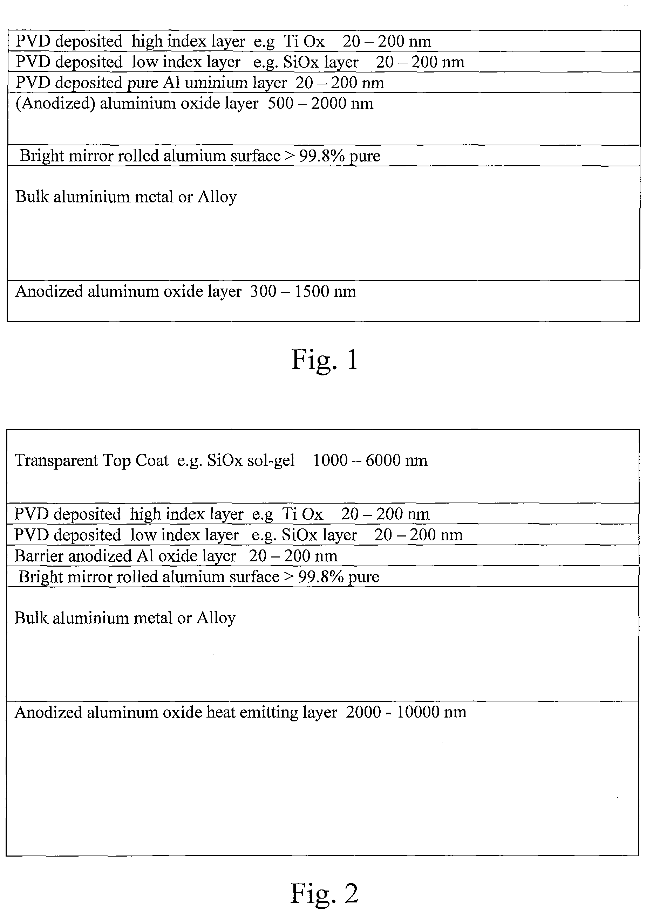

Figure 1 shows a typical layer structure (not to scale) of existing high reflectance aluminium mirrors.
Figure 2 shows a typical layer structure (not to scale) of a new thermally stable heat dissipating reflector according to the present invention.

### DESCRIPTION OF THE PREFERRED EMBODIMENTS

The following section describes in more detail the production methods used to make the reflector material that is the subject of this invention and how they differ from the previous methods and materials.

In the present invention an aluminium strip with a mirror surface achieved by bright rolling is treated by cleaning and electrochemically brightening to provide a smooth haze free surface.

Up to this point the processing is the same as for normal enhanced aluminium mirror preparation.

However, instead of being anodized by conventional means to provide a hard substrate between 0.5 and 1.5 microns thick as is the normal practice, it is anodized under conditions to form an extremely thin but dense and hard transparent coating of aluminium oxide of carefully controlled thickness, known as a "barrier layer". The process is commonly known as barrier layer anodizing.

This protective barrier layer coating over the aluminium reflective layer is a key element in our new reflector material because it removes the need to apply a pure aluminium reflectance layer by PVD and provides an aluminium mirror base surface that oxidizes much more slowly at high temperatures than either the conventional vacuum coated aluminium reflectance layer or bare aluminium.

The barrier layer may be produced according to known procedures by immersing the strip in a bath of electrolyte formed from a diluted solution of one or more of the following acids and applying a positive voltage of between 2 and 200V for a time between 10 and 300 seconds appropriate to the rate of coating formation and the desired coating thickness, preferably between 20 and 60 nm, suitable acids including, but without being limited to, Tartaric, Citric, Oxalic, Phosphoric, or Sulphuric acids or mixtures thereof or another suitable barrier layer forming electrolyte, preferably with pH lower than 0.9.

Following the treatment described above, the electrochemically processed coil is treated to enhance reflectivity using PVD processes under high vacuum.

A key feature of the present invention is that the electrochemically processed aluminium bulk aluminium surface together with its barrier anodized protection coat forms the reflection layer. This is PVD coated with a low refractive index layer (index 1.3-1.8) such as silicon or aluminium oxide of thickness between 20 and 200 nm followed by a high refractive index layer (index 1.8-3.0) such as zirconium, tin or titanium oxide of thickness between 20 and 200 nm in the conventional manner to produce a multi-layer stack that enhances reflectivity.

The electrochemically formed protective barrier layer which covers the reflecting aluminium surface serves to hinder or prevent its oxidation at high temperature and thereby greatly improves the long term performance of the complete reflector surface at high temperatures.

It is important to note that in the case of the present invention the application by PVD of a high reflectance aluminium coat is not made, whereas in all other vacuum coating process to manufacture enhanced aluminium reflectors, a metallic layer of aluminium or silver is PVD coated onto the surface to make a reflection layer.

The next stage of the process is the application of a transparent clear coating over the vacuum coated high reflectance surface.

This can be achieved by roll, dip, curtain or spray coating of a suitable sol-gel coat to produce a coating of thickness between 1 and 10 µm consisting primarily of silicon oxide or titanium oxide.

The coating is applied to a thickness suitable to give a thermal emissivity of greater than 0.25.

Alternatively a transparent layer of SiOx
can be applied by vacumm coating processes.

The next feature of the reflector is the high emissivity temperature resistant coating applied to the reverse side of the reflector material.

The preferred method for making this is to chemically remove the oxide film formed on the reverse side of the strip during the barrier layer anodizing process and then anodize the reverse surface to provide a coating of aluminim oxide of thickness from 2 to 10 microns.

To achieve this without damaging the reflective surface it is necessary to mask that surface either by using fixed masks in the chemical treatment baths which prevent the process liquids from reaching the reflective surface or by the application of an adherent, chemical resistant protective film to the reflective surface, which can be removed after completion of the anodizing.

As an alternative method of providing a high emissivity surface, a layer of silicon oxide
can be applied to the reverse surface by sol-gel coating. However the emissivity obtained by this method is inferior to that with the preferred anodizing method.

Following the anodizing or sol-gel coating process it is advantageous as a further step to subject the material to a low tensile stress in order to fracture the oxide reverse side coating and prevent it from influence the metal structure at high temperature operation.

### EXAMPLE

As an example and to verify the invention, a continuous strip of aluminium reflector material with a 99.9% pure mirror surface as described above was processed by electro-chemical brightening in a phosphoric acid based electrolyte according to known procedures to produce a smooth high reflection surface.

This was followed by the formation, by anodic electrolytic treatment in a bath of dilute acid solution with a pH value of less than 0.9 selected from the acids listed above, of a protective barrier layer, comprising mainly aluminium oxide, of thickness between 20 and 100 nm.

The strip was then transferred to a vacuum coating line in which were applied sequentially by PVD, without the preceding application of a PVD coated metallic reflection layer, a layer of SiOx of thickness optimised within the range 20 to 120 nm and a layer of TiOx of thickness optimised within the range 20 to 120 nm. No PVD applied metallic aluminium or silver high reflection layer was used.

The PVD coated strip was then transferred to a further production line in which was applied by roll coating from liquid a silicon oxide based sol-gel coating of thickness between 1 and 5 µm. The surface so produced had a total reflectance of 92%.

After sol-gel coating the reflective surface was completely masked with a chemically resistant adhesive plastic film and the material was chemically processed in suitable treatment baths by dissolving the existing oxide film in a warm alkaline solution, rinsing thoroughly and then anodizing the surface in sulphuric acid and sealing in the conventional manner to produce an anodized layer on the reverse side of thickness between 2 and 6 microns.

Following removal of the protective film it was found that the reflective properties of the prime surface were unaffected by the chemical treatment.

Measurement of the emissivity gave results of 0.3 for the reflective face coated with SiOx sol-gel and 0.6 for the anodized layer on the reverse side.

To verify the effectiveness of the invention, a reflector material manufactured according to the above method and a second reflector manufactured according to the previous art were measured to determine there total reflectance using an integrating sphere instrument and were subjected together to testing at a continuous temperature of 315°C ± 20°C for a period of 100 days.

After this time at temperature the material manufactured according to the previous art had lost total reflectance at a rate of approximately 0.01% per day while the reflector material manufactured according to the claimed new method showed no loss of total reflectance.

## Claims

1. A high reflectance temperature resistant aluminium based mirror reflector comprising an aluminium support material having a rolled mirror surface which is electro-brightened, covered with a transparent barrier layer of aluminium oxide, prepared by anodization, resulting in a reflective base layer, wherein the mirror reflector further comprises
a) a reflectance enhancing optical layer stack formed by a low refractive index layer, having an index of between 1.3 and 1.8, being provided directly on the aluminium oxide barrier layer of the reflective base layer and surmounted by a high refractive index layer, having an index of between 1.8 and 3.0,
b) a coating of a protective and transparent layer with high thermal emittance on the optical layer stack according to (a), selected from silicon oxide and titanium oxide, and
c) a coating at the reverse side of the reflector, consisting of aluminium oxide or silicon oxide of thickness greater than 2.0 microns and the coating having a thermal emittance greater than 0.4 at 250°C.

2. A mirror reflector according to claim 1, **characterized in that** the aluminium support material is produced from an alloy from the Aluminium Association 1000 series, 3000 series, 5000 series or 8000 series which is clad with a bright mirror rolled layer of aluminium of purity greater than 99.80%.

3. A mirror reflector according to claim 1, **characterized in that** the aluminium support material is produced from an alloy from the Aluminium Association 1000 series with a purity of greater than 99.80% and a bright mirror rolled surface.

4. A mirror reflector according to any of claims 1 to 3, **characterized in that** the transparent barrier layer of aluminium oxide, prepared by anodization, has a thickness of between 20 and 60 nm and has been formed by anodizing in a dilute solution of one of the following acids: tartaric, phosphoric, sulphuric and oxalic acids or mixtures thereof, with a pH value of <0.9.

5. A mirror reflector according to any of claims 1 to 3, **characterized in that** the low refractive index coating is selected from fluorides of aluminium, barium, calcium, lanthanum and magnesium and from oxides of aluminium and silicon and mixtures of the aforementioned compounds and the high refractive index transparent coating is selected from silicon nitride and from oxides of hafnium, tantalum, titanium, tin, zinc and zirconium and suitable mixtures of the aforementioned compounds.

6. A mirror reflector according to any of claims 1 to 3, **characterized in that** the low refractive index transparent coating is PVD coated and has a thickness within the range 20-200 nm and the high refractive index transparent coating is PVD coated and has a thickness within the range 20-200 nm.

7. A mirror reflector according to any of claims 1 to 3, **characterized in that** the coating applied to the high reflectance layer is a transparent protective layer of silicon oxide or titanium oxide applied as sol-gel coat, wherein the thickness of the silicon oxide layer is in the range 0.5 to 10 microns, providing a high solar reflectance and a thermal emittance of greater than 30%.

8. A mirror reflector according to any of claims 1 to 3, **characterized in that** the high emissivity coating used for the reverse side of the mirror has a thickness between 2.0 and 10 microns and is an aluminium oxide layer produced by an anodic oxidation of the reverse surface.

9. A mirror reflector according to any of claims 1 to 3, **characterized in that** the high emissivity coating used for the reverse side of the mirror has a thickness between 4.0 and 8.0 microns and is an aluminium oxide layer produced by an anodic oxidation of the reverse surface.

10. A mirror reflector according to any of claims 1 to 3, **characterized in that** the high thermal emittance coating used for the reverse side of the mirror has a thickness between 2.0 and 10 microns and is a silicon oxide layer applied as a sol-gel-coat.

11. A mirror reflector according to any of claims 1 to 3, wherein the high thermal emittance coating used for the reverse side of the mirror consists of aluminium oxide and has a thermal emissivity of at least 50%.

12. Method for the preparation of a mirror reflector according to any of claims 1 to 10, comprising the steps of:
(a) providing an aluminium support material whose surface consists of a high purity electro-brightened aluminium layer that forms part of the rolled aluminium surface,
(b) preparing, by anodization, the transparent barrier layer of aluminium oxide on the support material,
(c) forming the low and high refractive index coatings of the reflectance enhancing optical stack by PVD processes directly on the aluminium oxide barrier layer,
(d) applying the silicon oxide or titanium oxide coating of the protective and transparent layer with high thermal emittance on the optical stack obtained in step (c), and
(e) preparing the coating at the reverse side of the reflector by anodic oxidation to produce an aluminium oxide coating, or by sol-gel coating or vacuum coating the reverse side with a layer of silicon oxide.

## Patentansprüche

1. Hochreflektierender, temperaturbeständiger Spiegelreflektor auf Aluminiumbasis, umfassend ein Aluminiumträgermaterial mit einer gewalzten , elektrochemisch aufgehellten Spiegeloberfläche, die mit einer transparenten Sperrschicht aus Aluminiumoxid bedeckt ist, die durch Anodisation hergestellt wurde, was zu einer reflektierenden Basisschicht führt, wobei der Spiegelreflektor weiterhin umfasst
a) einen reflexionsverbessernden optischen Schichtstapel, der aus einer Schicht mit niedrigem Brechungsindex mit einem Index zwischen 1,3 und 1,8 gebildet ist, der direkt auf der Aluminiumoxidbarriereschicht der reflektierenden Basisschicht vorgesehen ist und von einer Schicht mit hohem Brechungsindex überlagert ist, die einen Index zwischen 1,8 und 3,0 aufweist,
b) eine Beschichtung aus einer schützenden und transparenten Schicht mit hohem thermischem Emissionsvermögen auf dem optischen Schichtstapel gemäß (a), ausgewählt aus Siliciumoxid und Titanoxid, und
c) eine Beschichtung auf der Rückseite des Reflektors, die aus Aluminiumoxid oder Siliciumoxid mit einer Dicke von mehr als 2,0 Mikrometer besteht, wobei die Beschichtung ein thermisches Emissionsvermögen von mehr als 0,4 bei 250°C aufweist.

2. Spiegelreflektor nach Anspruch 1, **dadurch gekennzeichnet, dass** das Aluminiumträgermaterial aus einer Legierung der Aluminium Association 1000-Serie, 3000-Serie, 5000-Serie oder 8000-Serie hergestellt ist, die mit einer glänzenden, spiegelgewalzten Schicht aus Aluminium mit einer Reinheit von mehr als 99,80% überzogen ist.

3. Spiegelreflektor nach Anspruch 1, **dadurch gekennzeichnet, dass** das Aluminiumträgermaterial aus einer Legierung der Aluminium Association 1000-Serie mit einer Reinheit von mehr als 99,80 % und einer glänzenden, spiegelverstärkten Oberfläche hergestellt ist.

4. Spiegelreflektor nach einem der Ansprüche 1 bis 3, **dadurch gekennzeichnet, dass** die durch Anodisation hergestellte transparente Barriereschicht aus Aluminiumoxid eine Dicke zwischen 20 und 60 nm aufweist und durch Anodisieren einer der folgenden Säuren: Weinsäure, Phosphorsäure, Schwefelsäure und Oxalsäure oder Mischungen davon in einer verdünnten Lösung mit einem pH-Wert von <0,9 gebildet wurde.

5. Spiegelreflektor nach einem der Ansprüche 1 bis 3, **dadurch gekennzeichnet, dass** die Beschichtung mit niedrigem Brechungsindex ausgewählt ist aus Fluoriden von Aluminium, Barium, Calcium, Lanthan und Magnesium und aus Oxiden von Aluminium und Silicium und Mischungen der vorgenannten Verbindungen, und die transparente Beschichtung mit hohem Brechungsindex ausgewählt ist aus Siliciumnitrid und aus Oxiden von Hafnium, Tantal, Titan, Zinn, Zink und Zirkonium und geeigneten Mischungen der vorgenannten Verbindungen.

6. Spiegelreflektor nach einem der Ansprüche 1 bis 3, **dadurch gekennzeichnet, dass** die transparente Beschichtung mit niedrigem Brechungsindex mit PVD aufgeschichtet ist und eine Dicke im Bereich von 20-200 nm aufweist, und die transparente Beschichtung mit hohem Brechungsindex mit PVD aufgeschichtet ist und eine Dicke im Bereich von 20-200 nm aufweist.

7. Spiegelreflektor nach einem der Ansprüche 1 bis 3, **dadurch gekennzeichnet, dass** die auf die Schicht mit hohem Reflexionsgrad aufgebrachte Beschichtung eine transparente Schutzschicht aus Siliciumoxid oder Titanoxid ist, die als Sol-Gel-Schicht aufgebracht ist, wobei die Dicke der Siliciumoxidschicht im Bereich von 0,5 bis 10 Mikrometer liegt, wodurch ein hohes Sonnenreflexionsvermögen und ein thermisches Emissionsvermögen von mehr als 30% vorgesehen wird.

8. Spiegelreflektor nach einem der Ansprüche 1 bis 3, **dadurch gekennzeichnet, dass** die für die Rückseite des Spiegels verwendete Beschichtung mit hohem Emissionsvermögen eine Dicke zwischen 2,0 und 10 Mikrometer aufweist und eine Aluminiumoxidschicht ist, die durch eine anodische Oxidation der Rückseite erzeugt wurde.

9. Spiegelreflektor nach einem der Ansprüche 1 bis 3, **dadurch gekennzeichnet, dass** die für die Rückseite des Spiegels verwendete Beschichtung mit hohem Emissionsvermögen eine Dicke zwischen 4,0 und 8,0 Mikron aufweist und eine Aluminiumoxidschicht ist, die durch eine anodische Oxidation der Rückseite erzeugt wurde.

10. Spiegelreflektor nach einem der Ansprüche 1 bis 3, **dadurch gekennzeichnet, dass** die für die Rückseite des Spiegels verwendete Beschichtung mit hohem thermischen Emissionsvermögen eine Dicke zwischen 2,0 und 10 Mikron aufweist und eine Siliciumoxidschicht ist, die als Sol-Gel-Schicht aufgebracht wurde.

11. Spiegelreflektor nach einem der Ansprüche 1 bis 3, wobei die für die Rückseite des Spiegels verwendete Beschichtung mit hohem thermischen Emissionsvermögen aus Aluminiumoxid besteht und ein thermisches Emissionsvermögen von mindestens 50% aufweist.

12. Verfahren zur Herstellung eines Spiegelreflektors nach einem der Ansprüche 1 bis 10, mit den Schritten:
(a) Bereitstellen eines Aluminiumträgermaterials, dessen Oberfläche aus einer hochreinen, elektrochemisch aufgehellten Aluminiumschicht besteht, die einen Teil der gewalzten Aluminiumoberfläche bildet,
(b) Herstellen der transparenten Sperrschicht aus Aluminiumoxid auf dem Trägermaterial durch Anodisieren,
(c) Bilden der Beschichtungen mit niedrigem und hohem Brechungsindex des reflexionsverbessernden optischen Stapels durch PVD-Verfahren direkt auf der Aluminiumoxid-Sperrschicht,
(d) Aufbringen der Siliciumoxid- oder Titanoxidschicht der schützenden und transparenten Schicht mit hohem thermischem Emissionsvermögen auf den in Schritt (c) erhaltenen optischen Stapel und
(e) Herstellen der Beschichtung auf der Rückseite des Reflektors durch anodische Oxidation zur Erzeugung einer Aluminiumoxidschicht oder durch Sol-Gel-Beschichtung oder Vakuumbeschichtung der Rückseite mit einer Siliciumoxidschicht.

## Revendications

1. Réflecteur de miroir à base d'aluminium résistant à une température de réflectance élevée, comprenant un matériau de support en aluminium présentant une surface de miroir laminée qui est électro-polie, recouverte d'une couche barrière transparente d'oxyde d'aluminium, préparée par anodisation, qui résulte en une couche de base réfléchissante, dans lequel le réflecteur de miroir comprend en outre:
a) une pile de couches optiques de renforcement de la réflectance formée par une couche à indice de réfraction bas, qui présente un indice compris entre 1,3 et 1,8 et qui est prévue directement sur la couche barrière d'oxyde d'aluminium de la couche de base réfléchissante et qui est surmontée par une couche à haut indice de réfraction dont l'indice est compris entre 1,8 et 3,0,
b) un revêtement constitué d'une couche de protection transparente qui présente une haute émittance thermique sur la pile de couches optiques conformément au point a), sélectionnée parmi l'oxyde de silicium et l'oxyde de titane, et
c) un revêtement sur le côté envers du réflecteur, constitué d'oxyde d'aluminium ou d'oxyde de silicium dont l'épaisseur est supérieure à 2,0 microns, le revêtement présentant une émittance thermique supérieure à 0,4 à 250°C.

2. Réflecteur de miroir selon la revendication 1, **caractérisé en ce que** le matériau de support en aluminium est produit à partir d'un alliage de l'Association de l'Aluminium de la série 1000, de la série 3000, de la série 5000 ou de la série 8000 qui est revêtu d'une couche laminée de miroir réfléchissant d'aluminium dont la pureté est supérieure à 99,80 %.

3. Réflecteur de miroir selon la revendication 1, **caractérisé en ce que** le matériau de support en aluminium est produit à partir d'un alliage de l'Association d'Aluminium de la série 1000 qui présente une pureté supérieure à 99,80 % et d'une surface laminée de miroir réfléchissant.

4. Réflecteur de miroir selon l'une quelconque des revendications 1 à 3, **caractérisé en ce que** la couche barrière transparente d'oxyde d'aluminium, préparée par anodisation, présente une épaisseur comprise entre 20 nm et 60 nm et a été formée par anodisation dans une solution diluée de l'un des acides suivants: les acides tartrique, phosphorique, sulfurique et oxalique ou des mélanges de ceux-ci, avec une valeur de pH inférieure à 0,9.

5. Réflecteur de miroir selon l'une quelconque des revendications 1 à 3, **caractérisé en ce que** le revêtement à indice de réfraction bas est sélectionné parmi des fluorures d'aluminium, de baryum, de calcium, de lanthane et de magnésium et parmi des oxydes d'aluminium ou de silicium ainsi que des mélanges des composés mentionnés ci-dessus, et le revêtement transparent à haut indice de réfraction est sélectionné parmi le nitrure de silicium et parmi des oxydes de hafnium, de tantale, de titane, d'étain, de zinc ou de zirconium ainsi que des mélanges appropriés des composés mentionnés ci-dessus.

6. Réflecteur de miroir selon l'une quelconque des revendications 1 à 3, **caractérisé en ce que** le revêtement transparent à indice de réfraction bas est déposé par PVD et présente une épaisseur comprise à l'intérieur de la gamme de 20 nm à 200 nm, et le revêtement transparent à haut indice de réfraction est déposé par PVD et présente une épaisseur comprise à l'intérieur de la gamme de 20 nm à 200 nm.

7. Réflecteur de miroir selon l'une quelconque des revendications 1 à 3, **caractérisé en ce que** le revêtement appliqué à la couche à haute réflectance est une couche de protection transparente d'oxyde de silicium ou d'oxyde de titane appliquée comme revêtement sol-gel, dans lequel l'épaisseur de la couche d'oxyde de silicium est comprise à l'intérieur de la gamme de 0,5 micron à 10 microns, assurant une réflectance solaire élevée et une émittance thermique supérieure à 30 %.

8. Réflecteur de miroir selon l'une quelconque des revendications 1 à 3, **caractérisé en ce que** le revêtement à haute émissivité utilisé pour le côté envers du miroir présente une épaisseur comprise entre 2,0 microns et 10 microns et est une couche d'oxyde d'aluminium produite par une oxydation anodique de la surface envers.

9. Réflecteur de miroir selon l'une quelconque des revendications 1 à 3, **caractérisé en ce que** le revêtement à haute émissivité utilisé pour le côté envers du miroir présente une épaisseur comprise entre 4,0 microns et 8,0 microns et est une couche d'oxyde d'aluminium produite par une oxydation anodique de la surface envers.

10. Réflecteur de miroir selon l'une quelconque des revendications 1 à 3, **caractérisé en ce que** le revêtement à haute émittance thermique utilisé pour le côté envers du miroir présente une épaisseur comprise entre 2,0 microns et 10 microns et est une couche d'oxyde de silicium appliquée comme un revêtement sol-gel.

11. Réflecteur de miroir selon l'une quelconque des revendications 1 à 3, dans lequel le revêtement à haute émittance thermique utilisé pour le côté envers du miroir est constitué d'oxyde d'aluminium et présente une émissivité thermique d'au moins 50 %.

12. Procédé de préparation d'un réflecteur de miroir selon l'une quelconque des revendications 1 à 10, comprenant les étapes suivantes:
(a) fournir un matériau de support d'aluminium dont la surface consiste en une couche d'aluminium électro-polie de grande pureté qui forme une partie de la surface d'aluminium laminée,
(b) préparer, par anodisation, la couche barrière transparente d'oxyde d'aluminium sur le matériau de support,
(c) former les revêtements à haut et bas indices de réfraction de la pile optique de renforcement de réflectance par des procédés PVD directement sur la couche barrière d'oxyde d'aluminium,
(d) appliquer le revêtement d'oxyde de silicium ou d'oxyde de titane de la couche de protection transparente qui présente une haute émittance thermique sur la pile optique obtenue à l'étape (c), et
(e) préparer le revêtement sur le côté envers du réflecteur par oxydation anodique afin de produire un revêtement d'oxyde d'aluminium, ou par un revêtement sol-gel ou un revêtement sous vide du côté envers avec une couche d'oxyde de silicium.
